# EUROPEAN PATENT SPECIFICATION

(11) **EP 4 487 927 B1**
(45) Date of publication and mention of the grant of the patent: **13.05.2026**
(21) Application number: 24185445.4
(22) Date of filing: 28.06.2024
(51) Int. Cl.: A63C 17/01

(54) **A COMPOSITE SKATEBOARD DECK, A COMPOSITE SKATEBOARD, AND A METHOD FOR MANUFACTURING A COMPOSITE SKATEBOARD DECK**
SKATEBOARD DECK AUS VERBUNDWERKSTOFF, SKATEBOARD AUS VERBUNDWERKSTOFF UND VERFAHREN ZUR HERSTELLUNG EINES SKATEBOARD DECK AUS VERBUNDWERKSTOFF
CORPS DE PLANCHE À ROULETTES COMPOSITE, PLANCHE À ROULETTES COMPOSITE ET PROCÉDÉ DE FABRICATION DU CORPS D'UNE PLANCHE À ROULETTES COMPOSITE

(30) Priority: 07.07.2023 FI 20235805
(43) Date of publication of application: 08.01.2025
(73) Proprietor: Napalm Custom Oy, 33240 Tampere (FI)
(72) Inventor: Huttunen, Mikko, 33240 Tampere (FI)
(74) Representative: Berggren Oy

(56) References cited:
- US-A1- 2019 091 551
- US-B1- 10 137 357

## Description

### Technical field

The present invention relates a composite skateboard deck and a method for manufacturing the composite skateboard deck. The invention also relates to a skateboard with a composite skateboard deck and a method for manufacturing a composite skateboard deck.

### Background

Skateboard decks of traditional wooden skateboards are composed of stacked wood layers combined together using adhesive bond. Such wooden skateboards are cheap to produce, but due to construction they wear, chip, break, and lose performance very easily, especially when being worked hard by an experienced user.

Composite skateboards have been introduced to skateboard deck constructions for decades ago, these skateboards include both fiber reinforcement layers and edges manufactured to withstand impact. On such constructions skateboard deck edges have utilized reinforcements or fills. Hybrid skateboards composed of plywood and fiber reinforcement layers have been in the market since 1980s. Hybrid skateboard decks could include wood, fiber reinforcement layers and non-wood parts, for example, plastic parts.

US 20190091551 discloses an electric-powered personal transportation vehicle featuring a composite board designed to support the user's weight. The vehicle includes one or more wheels driven by electric motors, which are powered by one or more batteries. The composite board is made up of a heterogeneous mix of individual components, including a spine made of hardwood material and sides made of vibration-dampening, high-density foam.

US 10137357 discloses a skateboard deck is designed to be lighter, stronger, and more resilient overall. Composite laminate layers, including carbon fiber, enhance the deck's strength and performance by reducing weight and thickness while boosting resilience. High-strength tip fills and side edges prevent chipping and delamination, with composite layers inlaid for added protection. These features safeguard the deck against abrasion, chipping, and delamination.

### Summary

Now there has been invented an improved composite skateboard deck, a method for manufacturing a composite skateboard deck and a skateboard with a composite skateboard deck. The scope of protection sought for various embodiments of the invention is set out by the independent claims. Some further aspects are defined in the dependent claims. The embodiments, examples and features, if any, described in this specification that do not fall under the scope of the independent claims are to be interpreted as examples useful for understanding various embodiments of the invention.

According to a first aspect according to the invention of claim 1, there is provided a skateboard deck for skateboarding comprising a first fiber layer as a top layer, a non-wood bottom layer or a wood bottom layer as a bottom layer and a core stacked between the first fiber layer and the non-wood bottom layer or the wood bottom layer, which the core comprises at least one uniform full size non-wood layer, at least one wood layer with or without tip fills and a second fiber layer.

According to a further embodiment of the invention, the core of the skateboard deck further comprises at least a second uniform full size non-wood layer. According to a further embodiment of the invention, the core of the skateboard deck further comprises at least one or more second wood layers with or without tip fills. According to a further embodiment of the invention, the core comprises two uniform full size non-wood layers and wherein at least one of the two uniform full size non-wood layers comprises a weight reduction member arranged in a space of the center area of a uniform full size non-wood layer. According to a further embodiment of the invention, the skateboard deck comprises two or more wood layers and wherein at least one of the two or more wood layers comprises a weight reduction member arranged in a space of the center area of a wood layer. According to a further embodiment of the invention, the weight reducing member arranged in the space is foam, cellular material or any other weight reducing material used in the composite technology. According to a further embodiment of the invention, the material of a fiber layer is composite. According to an example, the fiber layer is a non-full size layer. According to a further embodiment of the invention, the material of the uniform full size non-wood layer or the non-wood bottom layer is polymer or composite.

According to further embodiment of the invention, the material of the tip fills is polymer or composite and which tip fills have equal thickness as the wood layer comprising the tip fills. According to a further embodiment of the invention, the uniform full size non-wood layer is thicker than one or more wood layers of the core or fiber layers. According to a further embodiment of the invention, the uniform full size non-wood layer is of equal thickness as one or more wood layers of the core or fiber layers. According to a further embodiment of the invention, the uniform full size non-wood layer is thinner than one or more wood layers of the core or fiber layers. According to a further embodiment of the invention, the there is a wood layer on the first fiber layer as an additional topmost layer.

According to a second aspect according to the invention of claim 15, there is provided a skateboard comprising a skateboard deck according to the first aspect or any its examples.

According to a third aspect according to the invention of claim 16, there is provided a composite skateboard deck manufacturing method. The method comprises cutting material layers into an appropriate size, if the material layers are not ready-cut, which the material layers, are according to the first aspect or any its examples and in an order defined in the first aspect or any its examples, arranging the material layers on top of each other with adhesive layer between them to a mold, pressing in the mold together for a predetermined time and using a predetermined pressure and temperature the material layers by using pressure technology or resin infusion in vacuum bagging technology or resin transfer molding (RTM) for forming a preform skateboard deck, and cutting the preform skateboard deck into form of the final skateboard deck, if needed i.e. if they are not already in the form of the skateboard deck.

### Brief description of the drawings

In the following, various embodiments of the invention will be described in more detail with reference to the appended figures, in which
Fig. 1 shows layers of a composite skateboard deck according to an example embodiment;
Fig. 2 shows layers of a composite skateboard deck according to an example embodiment;
Fig. 3 shows layers of a composite skateboard deck according to an example embodiment;
Fig. 4 shows layers of a composite skateboard deck according to an example embodiment;
Fig. 5 shows layers of a composite skateboard deck according to an example embodiment;
Fig. 6 shows layers of a composite skateboard deck according to an example embodiment;
Fig. 7 shows as a flowchart a principle of a manufacturing method, pressing on mold, of a composite skateboard deck according to an example embodiment;
Fig. 8a shows a composite skateboard deck according to an example embodiment from above; and
Figs. 8b-8h examples of layers of tip areas of the composite skateboard deck of fig. 8a as a cross section along a line A-A shown in fig. 8a.

### Detailed description

The present invention relates to a high performance composite skateboard deck, a high performance composite skateboard for skateboarding, and a method for manufacturing a high performance composite skateboard deck. A high performance composite skateboard deck according to the present invention is stronger and more wear resistant than existing skateboards, especially than existing wooden skateboards. The high performance composite skateboard deck according to the present invention, hereafter called just a skateboard deck, comprises a core comprising one or more different material layers, a top layer and a bottom layer. The core is between the top layer and the bottom layer. The top layer is the layer on which a skateboarder stands while skateboarding. The bottom layer is the layer of the skateboard deck into which trucks with wheels are configured to be fixed.

The core of the skateboard deck comprises several layers of different material, from which at least one is full-size non-wood layer, at least one is wood layer with non-wood tip spacers i.e. tip fills, and at least one is fiber reinforcement layer i.e. fiber layer. The core layer(s) of the core of the skateboard deck may be said to comprise at least one full size non-wood layer. A non-wood layer is a layer composed of non-wood material, such as plastic. Plastic may be composed of single polymer, blend of different polymers, and it can contain any feasible additives. Plastic may be thermoset or thermoplastic material. Additives of plastic may be fillers, such as particles, flakes, chopped fibers etc., and/or they may be added to plastic to aid processability, mechanical properties and/or to serve any other desired function. Therefore the non-wood layer can be made op from composite material composed of two or more materials, but it is made up from different material that fiber layer.

A fiber layer is a full size composite layer composed of reinforcing fibers and a matrix. Matrix may be any suitable material, such as epoxy resin, polyester resin, thermoplastic plastic, etc., which binds the fibers and forms a composite layer together with reinforcing fibers.

Reinforcing fibers in composite layer may be continuous, discontinuous (chopped) or a combination of continuous and discontinuous fibers. Composite may also comprise fillers of any form. Composite may also comprise fillers of natural origin, such as chips/dust of wood, nut cells, seeds, etc. The composite may comprise more than one material types, for example, two or more above mentioned composite materials. Its purpose is to reduce the weight and thickness of the skateboard deck and also improve the resilience, strength, and durability.

A wood layer improves user feel characteristics. A fiber reinforcement layer called this on as a fiber layer is composed of a single piece and it can have a varying size. The fiber reinforcement layer improve strength properties of the skateboard deck. Non-wood tip reinforcement members i.e. so called tip fills or tip spacers of to the skateboard deck form a layer construction, together with full size non-wood layers of the core of the skateboard, where the tips, edges, or both of them are composed of i.e. made up only non-wooden material such as polymer for minimizing the wear, tear and delamination of the deck caused by normal use in skateboarding. A bottom layer is a non-wood layer or a wood layer and the top layer is a full size fiber layer. Usually, a wood layer is thinner than a non-wood layer and a fiber layer is thinner than a wood layer and a non-wood layer, but not necessarily in every skateboard deck. Thus, a non-wood layer can also be thinner than a wood layer and they can also have identical thickness. An example for a typical thickness of a wood layer is 0.3 - 2mm and a typical thickness of a non-wood layer is 0.3 - 8mm.

The surface size of a full-size layer, for example, a non-wood layer corresponds to the surface size of the skateboard deck i.e. it is as long and as wide as the skateboard deck i.e. from a tip to tip and an edge to edge. In other words, the term "full-size", as used herein, refers to a layer, which extends from a tip to a tip and an edge to an edge of a skateboard deck. A non-wood layer, but also a wood layer, may comprise one or more spaces for weight-reducing members in the center area of the layer i.e. in the non-edge area of the layer to reduce weight of the skateboard deck. A weight reducing member arranged in a space may be, for example, foam or cellular material made of, for example, polyurethane, or it may also be air, in which case the space in an opening i.e. a hole in the layer. It can be an open or closed cellular structure, honey comb construction or any other suitable material used in the weight reduction purposes in modern composite technology.

Thus, the present invention relates to hybrid skateboard constructions composed of different number of wood, non-wood and fiber reinforcement layers. Wood layers may be arranged with or without non-wood tip spacers i.e. so called tip fills on outermost edges of a skateboard deck. The term "tip fill", as used herein, refers to an edge or end inlay of a material that is different than the material that it is inlayed against. Tip fill can be composed of same or substantially the same material as full size non-wood layers. A tip fill may have the same or substantially the same thickness as the layer with which it is fixed. A tip fill may be made of, for example, polymer material such as plastic, composite or other suitable resilient material.

The hybrid skateboard construction is a composite skateboard deck, which core comprises at least one structurally uniform full size non-wood layer, at least one wood layer and at least one fiber layer. The term "uniform", as used herein, refers to a layer, which is made of one piece, but the layer still may comprise one or more weight reduction members. A fiber layer can be a full-size layer i.e. it corresponds the surface size of a skateboard deck, but it may also be a non-full size layer i.e. its size is slightly smaller or smaller than the surface size i.e. surface area of the skateboard deck. It may be cut to shape or have a shape of, for example, an oval, rectangle etc.

The layers of the skateboard deck are placed, i.e. layered on top of each other and attached to each other using and adhesive in order to manufacture a skateboard deck. If material layers are not ready-cut to appropriate size, they are cut before the layers are put to a mold. Appropriate size means herein a size suitable to be used in manufacturing of a skateboard deck structure. Appropriate sizes of material layers between layers may vary. A skateboard deck can be manufactured, for example, by stacking the layers with adhesive between the overlapping layers on a mold and pressing them together using pressure and a predetermined time. The pressure may be, for example, 1-150 bar and under pressure or over pressure may be used. Pressing can be made in cold mold or utilizing a heated mold. Manufacturing may also be done by resin infusion in vacuum bagging technology. Manufacturing may also be done using resin transfer molding (RTM). In the RTM procedure, a reaction resin is poured or injected onto the dry, semi-finished fiber parts, and these parts are consequently immersed by applying pressure within a closed vessel. Manufacturing may utilize dry fiber layers or it can utilize prepregs (i.e. fiber layers which are pre-impregnated with resin). This kind of manufacturing comprises curing phase during which the resin hardens. It may also comprise additional curing phases where strength properties of a composite structure are improved. Additional curing phases happen in controlled temperature over a specific predetermined time. Controlled temperature may be higher than a room temperature, for example, 30-200 °C, and the time of curing phase may be 1-1000 minutes. After the material layers are pressed together, the formed preform skateboard deck is cut into form of the final skateboard deck, if needed, for example, by CNC machining or any other suitable technic.

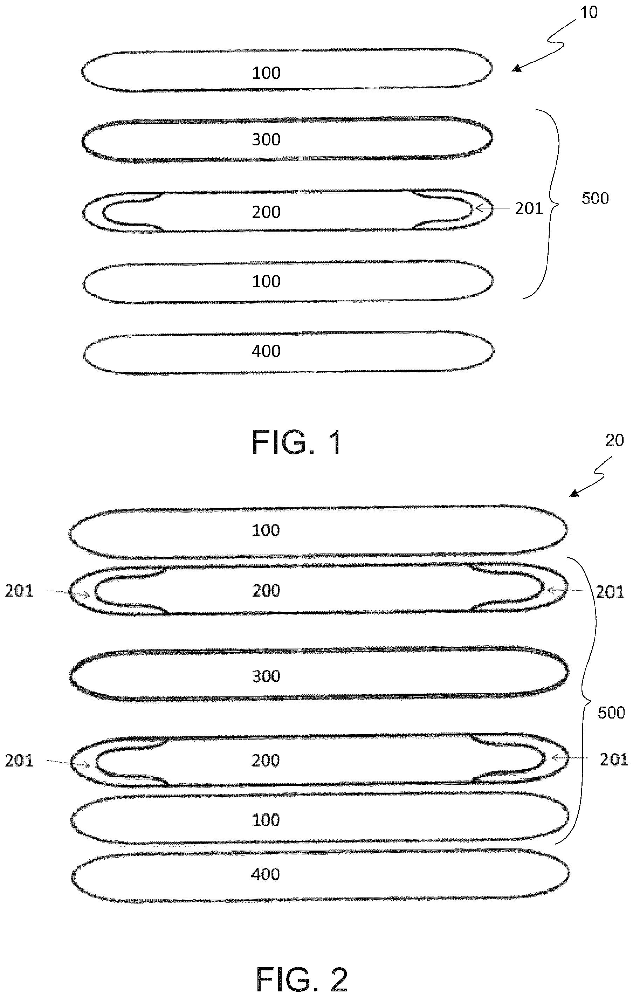

Figure 1 shows layers of a composite skateboard deck 10 according to an example embodiment. The uppermost layer i.e. the top layer of the skateboard deck 10 of this example embodiment is a fiber layer 100, which is a first fiber layer of this skateboard deck 10. The bottom layer is a non-wood bottom layer 400 made of, for example, polymer such as plastic. A core 500 stacked between the first fiber layer 100 and the non-wood bottom layer 400 comprises a full size non-wood layer 300 and a wood layer 200 with non-wood tip fills 201 at the edges of the wood layer 200. Under the non-wood layer 300 and the wood layer 200 there is a second fiber layer 100. The skateboard core includes the full size non-wood layer 300.

Figure 2 shows layers of a composite skateboard deck 20 according to an example embodiment. The uppermost layer i.e. the top layer of the skateboard deck 20 is again a first fiber layer 100. The bottom layer is a non-wood bottom layer 400, for example, a polymer layer. A core 500 stacked between the first fiber layer 100 and the non-wood bottom layer 400 comprises layers in the following order from top to the bottom: a first wood layer 200 with non-wood tip fills 201 at the edges of the wood layer 200, a first non-wood layer 300, a second wood layer 200 with non-wood tip fills 201, and a second fiber layer 100.

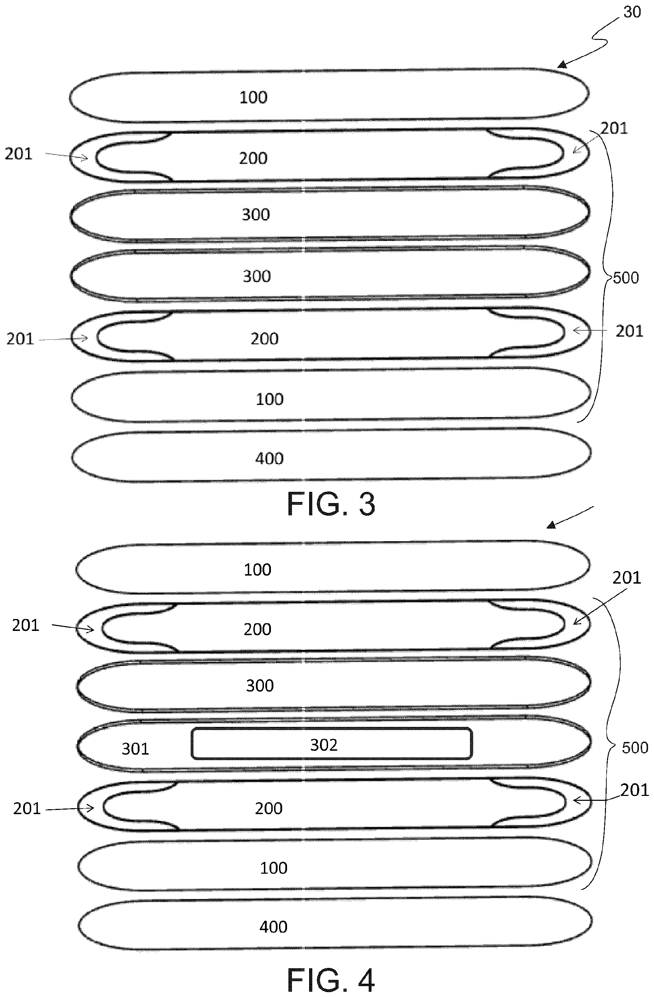

Figure 3 shows layers of a composite skateboard deck 30 according to an example embodiment. The uppermost layer i.e. the top layer of the skateboard deck 30 is again a first fiber layer 100. The bottom layer is a non-wood bottom layer 400 made of, for example, plastic. A core 500 stacked between the first fiber layer 100 and the non-wood bottom layer 400 comprises layers in the following order from top to the bottom: a first wood layer 200 with non-wood tip fills 201 at the edges of the wood layer 200, two non-wood layers 300, the first and the second on top of each other, a second wood layer 200 with non-wood tip fills 201, and a second fiber layer 100.

Figure 4 shows layers of a composite skateboard deck 40 according to an example embodiment. The top layer of the skateboard deck 40 is again a first fiber layer 100. The bottom layer is a non-wood bottom layer 400 made of, for example plastic. A core 500 stacked between the first fiber layer 100 and the non-wood bottom layer 400 comprises layers in the following order from top to the bottom: a first wood layer 200 with non-wood tip fills 201 at the edges of the wood layer 200, two non-wood layers 300, 301, the first non-wood layer 300 and the second non-wood layer 301 on top of each other, but the second non-wood layer 301 comprises a weight reducing member 302 in its inner area, a second wood layer 200 with non-wood tip fills 201, and a second fiber layer 100.

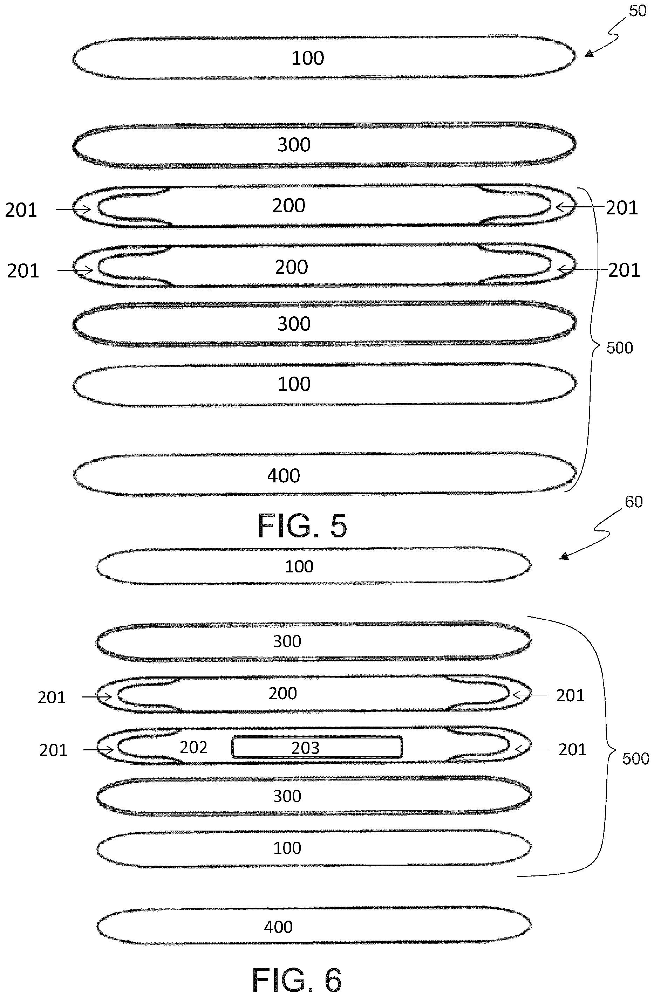

Figure 5 shows layers of a composite skateboard deck 50 according to an example embodiment. The top layer of the skateboard deck 50 is again a first fiber layer 100. The bottom layer is a non-wood bottom layer 400 made of, for example plastic. A core 500 stacked between the first fiber layer 100 and the non-wood bottom layer 400 comprises layers in the following order from top to the bottom: a first non-wood layer 300, two wood layers 200 with non-wood tip fills 201, a first and a second on top of each other, a second non-wood layer 300, and a second fiber layer 100.

Figure 6 shows layers of a composite skateboard deck 60 according to an example embodiment. The top layer of the skateboard deck 60 is a first fiber layer 100. The bottom layer is a non-wood bottom layer 400 made of, for example plastic. A core 500 stacked between the first fiber layer 100 and the non-wood bottom layer 400 comprises layers in the following order from top to the bottom: a first non-wood layer 300, two wood layers 200, 202 with non-wood tip fills 201, a second non-wood layer 300, and a second fiber layer 100.

The second non-wood layer 202 comprises a weight reducing member 203 in its inner area of the layer.

It is also possible that more than one layer of non-wood or wood layers of a core comprises a weight reducing element 302, 203. If there is more than one weight reducing element 302, 203, they can be also made of different materials. Furthermore, it is also possible that skateboard decks comprises additional layers to what is mentioned in figures or that one or more layers is changed to some other material. For example, a core 500 may comprise one or more additional fiber layers. In any case, a skateboard deck comprises a fiber layer in the top and a full size non-wood or wood layer in the bottom, and at least one uniform full-size non-wood layer, at least one wood layer with tip fills and a fiber layer in some order between the top and bottom layers. However, if the deck structure comprises one or more further layers, between them, there is this above mentioned structure.

It is, however, possible that the bottom layer 400 of a skateboard deck shown in one or more figures 1-6 is a full-size wood layer instead of a non-wood bottom layer. In addition to that, it is also possible that there is a wood layer on a first fiber layer 100 of a skateboard deck shown in one or more figures 1-6 as an additional topmost layer or a wood layer on a first fiber layer 100 (below it) of a skateboard deck shown in one or more figures 1-6 as an additional bottommost layer.

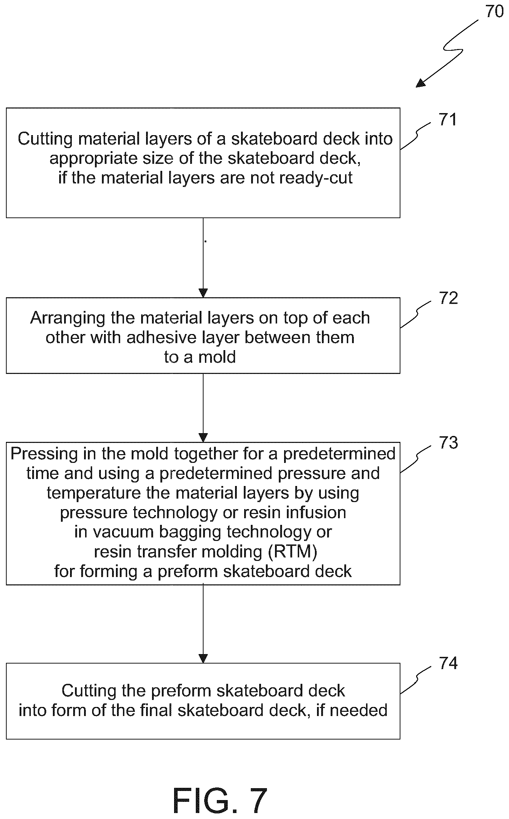

Figure 7 shows as a flowchart a principle of a manufacturing method 70 of a composite skateboard deck according to an example embodiment. In step 71, material layers of a skateboard deck are cut into appropriate size, if the material layers are not ready-cut. Material layers are layers that are shown in one of the figures 1 to 6. In step 72, the material layers are arranged on top of each other with adhesive layer between them on a mold. In step 73, in the mold that may be cold mold or a heated mold the material layers are pressed together for a predetermined time and using a predetermined pressure and temperature by using pressure technology or resin infusion in vacuum bagging technology or resin transfer molding (RTM) for forming a preform skateboard deck. In step 74, the preform skateboard deck is cut into form of the final skateboard deck, if needed.

A skateboard deck 10, 20, 30, 40, 50, 60 is a part of a skateboard. Trucks with wheels and other necessary parts are fastened to the bottom of the skateboard deck 10, 20, 30, 40, 50, 60 in order to provide a skateboard.

Considerable advantages are achieved by the present invention. By this composite skateboard deck, it is possible to provide a skateboard deck and a skateboard with a skateboard deck having improved strength and durability properties, which thus ensures better quality for skateboard decks. Scaling of its manufacturing is easy as well as its manufacturing, in general. The skateboard deck having a core structure in which non-wood layers together with wood-layers all having edges made of non-wood tip reinforcement members forms a construction for the skateboard deck, in which the edges of the skateboard deck can be entirely non-wood material i.e. no wood in the front or back edge areas. This is a structure, which makes the skateboard deck more durable. Non-wood layers and tip-fills of wooden layers form together, when stacked on top of each other and when bonded together using adhesive such as epoxy, a structure on the tips of the skateboard that contains no wood. There can, however, be an additional wood layer on top and/or on bottom of this non-wood layer structure. On such structures the non-wood plastic layers and wood layers with non-wood tip-fills form together a wear resistant structure.

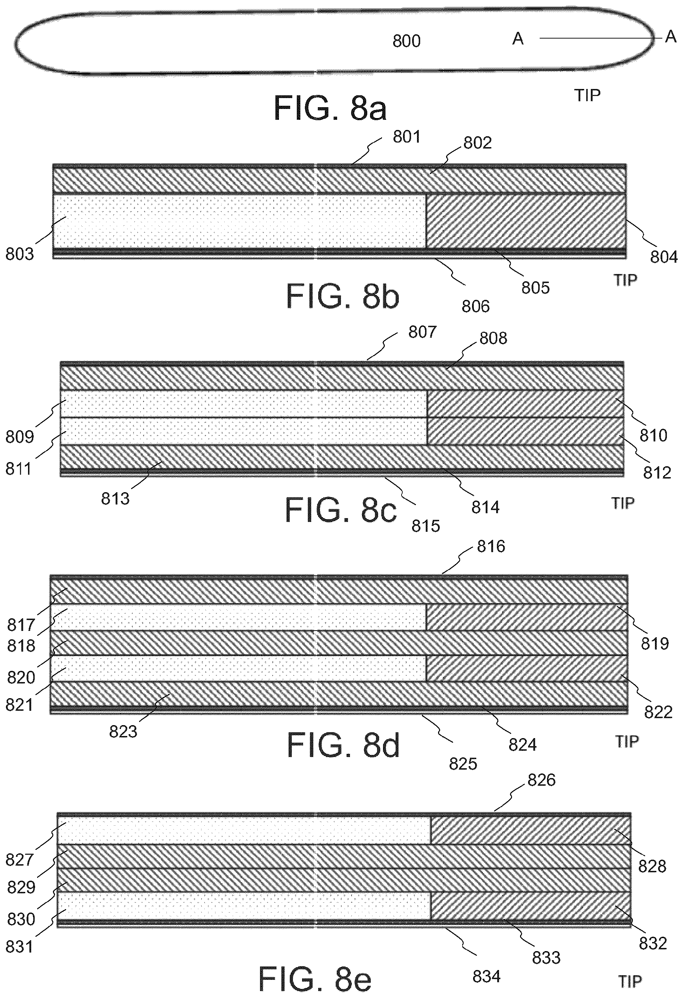

Figure 8a shows a composite skateboard deck 800 according to an example embodiment from above. Figures 8b-8h show examples of layers of end areas i.e. tip areas of the composite skateboard deck 800 as a cross section along a line A-A shown in fig. 8a.

In figure 8b, there are shown an example of layers of the composite skateboard deck 800 from up to down a first fiber layer 801, a plastic layer 802, a wood layer 803 with a plastic tip fill 804, a second fiber layer 805 and a non-wood bottom layer 806.

In figure 8c, there are shown an example of layers of the composite skateboard deck 800 from up to down a first fiber layer 807, a first plastic layer 808, a first wood layer 809 with a plastic tip fill 810, a second wood layer 811 with a plastic tip fill 812, a second plastic layer 813, a second fiber layer 814 and a non-wood bottom layer 815.

In figure 8d, there are shown an example of layers of the composite skateboard deck 800 from up to down a first fiber layer 816, a first plastic layer 817, a first wood layer 818 with a plastic tip fill 819, a second plastic layer 820, a second wood layer 821 with a plastic tip fill 822, a third plastic layer 823, a second fiber layer 824 and a non-wood bottom layer 825.

In figure 8e, there are shown an example of layers of the composite skateboard deck 800 from up to down a first fiber layer 826, a first wood layer 827 with a plastic tip fill 828, a first plastic layer 829, a second plastic layer 830, a second wood layer 831 with a plastic tip fill 832, a second fiber layer 833 and a non-wood bottom layer 834.

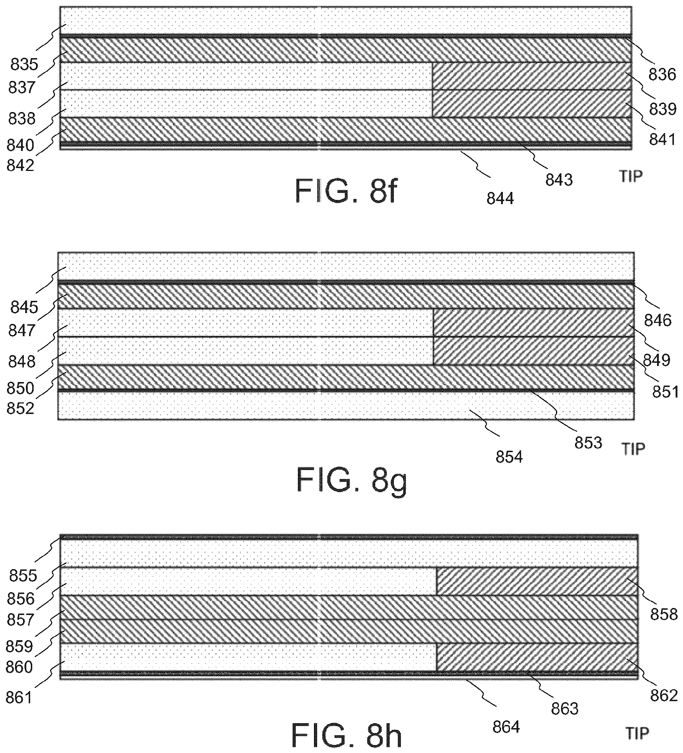

In figure 8f, there are shown an example of layers of the composite skateboard deck 800 from up to down a first wood layer 835 as an upper layer, a first fiber layer 836, a first plastic layer 837, a second wood layer 838 with a plastic tip fill 839, a third wood layer 840 with a plastic tip fill 841, a second plastic layer 842, a second fiber layer 843, and a non-wood bottom layer 844. On this example structure there is an additional wood layer (a first wood layer 835 ) on top of the top fiber layer 836 and the core of the skateboard is composed of a first plastic layer 837, a second wood layer 838 with a plastic tip fill 839, a third wood layer 840 with a plastic tip fill 841, a second plastic layer 842, a second fiber layer 843. The bottom layer is a non-wood bottom layer 844.

In figure 8g, there are shown an example of layers of the composite skateboard deck 800 from up to down a first wood layer 845 as an upper layer, a first fiber layer 846, a first plastic layer 847, a second wood layer 848 with a plastic tip fill 849, a third wood layer 850 with a plastic tip fill 851, a second plastic layer 852, a second fiber layer 853, and a fourth wood layer 854 as a bottom layer. On this example structure there is an additional wood layer (a first wood layer 845) on top of the top fiber layer 846 and the core of the skateboard is composed of a first plastic layer 847, a second wood layer 848 with a plastic tip fill 849, a third wood layer 850 with a plastic tip fill 851, a second plastic layer 852, a second fiber layer 853. The bottom layer is a non-wood bottom layer 854.

In figure 8h, there are shown an example of layers of the composite skateboard deck 800 from up to down a first fiber layer 855 as an upper layer a first wood layer 856, a second wood layer 857 with a plastic tip fill 858, a first plastic layer 859, a second plastic layer 860, a third wood layer 861 with a plastic tip fill 862, a second fiber layer 863, and a non-wood bottom layer 864. The construction of figure 8h is an example of a construction where there are an additional full size wood layer without tip fills located in the core of the skateboard.

It should be noted that, for example, different fiber layers of a composite skateboard deck may be made of same or different materials.

The features of the invention described and the embodiments mentioned in the application are freely combinable and interchangeable, except if the application particularly states that the embodiments or features are not interchangeable. The exemplary features described in connection with the different embodiments can be used with any other embodiment even if this were not mentioned separately.

It is obvious that the present invention is not limited solely to the above-presented embodiments, but it can be modified within the scope of the appended claims.

## Claims

1. A skateboard deck (10) for skateboarding comprising:
a first fiber layer (100) as a top layer, a non-wood bottom layer (400) or a wood bottom layer as a bottom layer and a core (500) stacked between the first fiber layer (100) and the non-wood bottom layer (400) or the wood bottom layer, **characterized in that** the core (500) comprises at least three different material layers comprising at least one uniform full size plastic layer (300, 301), at least one wood layer (200, 202) with tip fills (201) and a second uniform fiber layer (100).

2. A skateboard deck (10) according to claim 1, which the core (500) of the skateboard deck (10) further comprises at least a second uniform full size plastic layer (300, 301).

3. A skateboard deck (10) according to claim 1 or 2, which the core (500) of the skateboard deck (10) further comprises at least one or more second wood layers (200) with or without tip fills (201).

4. A skateboard deck (10) according to claim 1 or 3, wherein the core (500) comprises two uniform full size plastic layers (300, 301) and wherein at least one of the two uniform full size plastic layers (300, 301) comprises a weight reduction member (302) arranged in a space of the center area of a uniform full size plastic layer (300, 301).

5. A skateboard deck (10) according to claim 1, 2 or 4, wherein the skateboard deck (10) comprises two or more wood layers (200, 202) and wherein at least one of the two or more wood layers (200, 202) comprises a weight reduction member (203) arranged in a space of the center area of a wood layer (200, 202).

6. A skateboard deck (10) according to claim 5, wherein the weight reducing member arranged in the space is foam, cellular material or any other weight reducing material used in the composite technology.

7. A skateboard deck (10) according to any of claims 1 to 6, wherein material of a fiber layer (100) is composite.

8. A skateboard deck (10) according to any of claims 1 to 7, wherein a fiber layer (100) is a non-full size layer.

9. A skateboard deck (10) according to claim 2, wherein material of the second uniform full size plastic layer (300, 301) or the non-wood bottom layer (400) is polymer or composite.

10. A skateboard deck (10) according to any of claims 1 to 9, wherein material of the tip fills (201) is polymer or composite and which tip fills (201) have equal thickness as the wood layer (200, 202) comprising the tip fills (201).

11. A skateboard deck (10) according to any of claims 1 to 10, wherein the uniform full size plastic layer (300, 301) is thinner than one or more wood layers (200, 202) of the core (500) or fiber layers (100).

12. A skateboard deck (10) according to any of claims 1 to 10, wherein the uniform full size plastic layer (300, 301) is of equal thickness as one or more wood layers (200, 202) of the core (500) or fiber layers (100).

13. A skateboard deck (10) according to any of claims 1 to 12, wherein there is a wood layer on the first fiber layer (100) as an additional topmost layer.

14. A skateboard deck (10) according to any of claims 1 to 13, wherein the core (500) comprises at least one additional fiber layer.

15. A skateboard comprising a skateboard deck (10) according to any of claims 1 to 14.

16. A composite skateboard deck manufacturing method, the method comprises:
cutting material layers (100, 200, 201, 300, 301, 400) of a skateboard deck (10) into an appropriate size, if the material layers (100, 200, 201, 300, 301, 400) are not ready-cut, which the material layers (100, 200, 201, 300, 301, 400), are according to any of claims 1 - 14 and in an order defined in any of claims 1 - 14,
arranging the material layers (100, 200, 201, 300, 301, 400) on top of each other with adhesive layer between them to a mold,
pressing in the mold together for a predetermined time and using a predetermined pressure and temperature the material layers (100, 200, 201, 300, 301, 400) by using pressure technology or resin infusion in vacuum bagging technology or resin transfer molding (RTM) for forming a preform skateboard deck, and
cutting the preform skateboard deck into form of the final skateboard deck, if needed.

## Patentansprüche

1. Skateboarddeck (10) zum Skateboarden, umfassend:
eine erste Faserschicht (100) als Deckschicht, eine Nichtholzbodenschicht (400) oder eine Holzbodenschicht als Bodenschicht und einen Kern (500), der zwischen der ersten Faserschicht (100) und der Nichtholzbodenschicht (400) oder der Holzbodenschicht gestapelt ist, **dadurch gekennzeichnet, dass** der Kern (500) mindestens drei verschiedene Materialschichten umfasst, umfassend mindestens eine einheitliche vollflächige Kunststoffschicht (300, 301), mindestens eine Holzschicht (200, 202) mit Spitzenfüllungen (201) und eine zweite einheitliche Faserschicht (100).

2. Skateboarddeck (10) nach Anspruch 1, wobei der Kern (500) des Skateboarddecks (10) ferner mindestens eine zweite einheitliche vollflächige Kunststoffschicht (300, 301) umfasst.

3. Skateboarddeck (10) nach Anspruch 1 oder 2, wobei der Kern (500) des Skateboarddecks (10) ferner mindestens eine oder mehrere zweite Holzschichten (200) mit oder ohne Spitzenfüllungen (201) umfasst.

4. Skateboarddeck (10) nach Anspruch 1 oder 3, wobei der Kern (500) zwei gleichmäßige vollflächige Kunststoffschichten (300, 301) umfasst und wobei mindestens eine der beiden gleichmäßigen vollflächigen Kunststoffschichten (300, 301) ein gewichtsreduzierendes Element (302) umfasst, das in einem Raum des Mittelbereichs einer gleichmäßigen vollflächigen Kunststoffschicht (300, 301) angeordnet ist.

5. Skateboarddeck (10) nach Anspruch 1, 2 oder 4, wobei das Skateboarddeck (10) zwei oder mehr Holzschichten (200, 202) umfasst und wobei mindestens eine der zwei oder mehr Holzschichten (200, 202) ein Gewichtsreduzierungselement (203) umfasst, das in einem Raum des Mittelbereichs einer Holzschicht (200, 202) angeordnet ist.

6. Skateboarddeck (10) nach Anspruch 5, wobei das in dem Raum angeordnete gewichtsreduzierende Element aus Schaumstoff, zellulärem Material oder einem anderen in der Verbundtechnologie verwendeten gewichtsreduzierenden Material besteht.

7. Skateboarddeck (10) nach einem der Ansprüche 1 bis 6, wobei das Material einer Faserschicht (100) ein Verbundstoff ist.

8. Skateboarddeck (10) nach einem der Ansprüche 1 bis 7, wobei eine Faserschicht (100) eine nicht vollflächige Schicht ist.

9. Skateboarddeck (10) nach Anspruch 2, wobei das Material der zweiten gleichmäßigen vollflächigen Kunststoffschicht (300, 301) oder der Nichtholzbodenschicht (400) ein Polymer oder ein Verbundstoff ist.

10. Skateboarddeck (10) nach einem der Ansprüche 1 bis 9, wobei das Material der Spitzenfüllungen (201) ein Polymer oder ein Verbundstoff ist und die Spitzenfüllungen (201) die gleiche Dicke aufweisen wie die Holzschicht (200, 202), die die Spitzenfüllungen (201) umfasst.

11. Skateboarddeck (10) nach einem der Ansprüche 1 bis 10, wobei die einheitliche vollflächige Kunststoffschicht (300, 301) dünner ist als eine oder mehrere Holzschichten (200, 202) des Kerns (500) oder der Faserschichten (100).

12. Skateboarddeck (10) nach einem der Ansprüche 1 bis 10, wobei die einheitliche vollflächige Kunststoffschicht (300, 301) die gleiche Dicke wie eine oder mehrere Holzschichten (200, 202) des Kerns (500) oder der Faserschichten (100) aufweist.

13. Skateboarddeck (10) nach einem der Ansprüche 1 bis 12, wobei sich auf der ersten Faserschicht (100) eine Holzschicht als zusätzliche oberste Schicht befindet.

14. Skateboarddeck (10) nach einem der Ansprüche 1 bis 13, wobei der Kern (500) mindestens eine zusätzliche Faserschicht umfasst.

15. Skateboard, umfassend ein Skateboarddeck (10) nach einem der Ansprüche 1 bis 14.

16. Verfahren zur Herstellung eines Verbundstoff-Skateboarddecks, wobei das Verfahren Folgendes umfasst:
Schneiden von Materialschichten (100, 200, 201, 300, 301, 400) eines Skateboarddecks (10) in eine geeignete Größe, wenn die Materialschichten (100, 200, 201, 300, 301, 400) nicht fertig geschnitten sind, welche die Materialschichten (100, 200, 201, 300, 301, 400) sind, nach einem der Ansprüche 1 bis 14 und in einer in einem der Ansprüche 1 bis 14 definierten Reihenfolge,
Anordnen der Materialschichten (100, 200, 201, 300, 301, 400) übereinander mit einer Klebstoffschicht dazwischen in einer Form,
Zusammenpressen der Materialschichten (100, 200, 201, 300, 301, 400) in der Form für eine vorbestimmte Zeit und unter Verwendung eines vorbestimmten Drucks und einer vorbestimmten Temperatur unter Verwendung der Drucktechnologie oder der Harzinfusion in der Vakuumsacktechnologie oder des Harztransferpressens (RTM) zur Bildung eines vorgeformten Skateboarddecks, und Schneiden des vorgeformten Skateboarddecks in die Form des endgültigen Skateboarddecks, falls erforderlich.

## Revendications

1. Plateau de planche à roulettes (10) permettant de faire de la planche à roulettes, comprenant :
une première couche fibreuse (100) comme couche supérieure, une couche inférieure non-bois (400) ou une couche inférieure de bois comme couche inférieure et un noyau (500) empilé entre la première couche fibreuse (100) et la couche inférieure non-bois (400) ou la couche inférieure de bois, **caractérisé en ce que** le noyau (500) comprend au moins trois couches de matériaux différents comprenant au moins une couche de plastique uniforme de taille réelle (300, 301), au moins une couche de bois (200, 202) avec des remplissages d'extrémité (201) et une seconde couche fibreuse uniforme (100).

2. Plateau de planche à roulettes (10) selon la revendication 1, dans lequel le noyau (500) du plateau de planche à roulettes (10) comprend en outre au moins une seconde couche de plastique uniforme de taille réelle (300, 301).

3. Plateau de planche à roulettes (10) selon la revendication 1 ou 2, dans laquelle le noyau (500) du plateau de planche à roulettes (10) comprend en outre au moins une ou plusieurs secondes couches de bois (200) avec ou sans remplissages d'extrémité (201).

4. Plateau de planche à roulettes (10) selon la revendication 1 ou 3, dans lequel le noyau (500) comprend deux couches de plastique uniformes de taille réelle (300, 301) et dans lequel au moins l'une parmi les deux couches de plastique uniformes de taille réelle (300, 301) comprend un élément de réduction de poids (302) disposé dans un espace de la zone centrale d'une couche de plastique uniforme de taille réelle (300, 301).

5. Plateau de planche à roulettes (10) selon la revendication 1,2 ou 4, dans lequel le plateau de planche à roulettes (10) comprend deux ou plusieurs couches de bois (200, 202) et dans lequel au moins l'une parmi les deux ou plusieurs couches de bois (200, 202) comprend un élément de réduction de poids (203) disposé dans un espace de la zone centrale d'une couche de bois (200, 202).

6. Plateau de planche à roulettes (10) selon la revendication 5, dans lequel l'élément de réduction de poids disposé dans l'espace est une mousse, un matériau cellulaire ou tout autre matériau de réduction de poids utilisé dans la technologie des matériaux composites.

7. Plateau de planche à roulettes (10) selon l'une quelconque des revendications 1 à 6, dans lequel le matériau d'une couche fibreuse (100) est un composite.

8. Plateau de planche à roulettes (10) selon l'une quelconque des revendications 1 à 7, dans lequel une couche fibreuse (100) est une couche de taille réduite.

9. Plateau de planche à roulettes (10) selon la revendication 2, dans lequel le matériau de la seconde couche de plastique uniforme de taille réelle (300, 301) ou de la couche inférieure non-bois (400) est un polymère ou un composite.

10. Plateau de planche à roulettes (10) selon l'une quelconque des revendications 1 à 9, dans lequel le matériau des remplissages d'extrémité (201) est un polymère ou un composite et dont les remplissages d'extrémité (201) ont une épaisseur égale à celle de la couche de bois (200, 202) comprenant les remplissages d'extrémité (201).

11. Plateau de planche à roulettes (10) selon l'une quelconque des revendications 1 à 10, dans lequel la couche de plastique uniforme de taille réelle (300, 301) est plus fine qu'une ou plusieurs couches de bois (200, 202) du noyau (500) ou des couches fibreuses (100).

12. Plateau de planche à roulettes (10) selon l'une quelconque des revendications 1 à 10, dans lequel la couche de plastique uniforme de taille réelle (300, 301) est d'épaisseur égale à celle d'une ou plusieurs couches de bois (200, 202) du noyau (500) ou des couches fibreuses (100).

13. Plateau de planche à roulettes (10) selon l'une quelconque des revendications 1 à 12, dans lequel il y a une couche de bois sur la première couche fibreuse (100) en tant que couche supplémentaire la plus externe.

14. Plateau de planche à roulettes (10) selon l'une quelconque des revendications 1 à 13, dans lequel le noyau (500) comprend au moins une couche fibreuse supplémentaire.

15. Planche à roulettes comprenant un plateau de planche à roulettes (10) selon l'une quelconque des revendications 1 à 14.

16. Procédé de fabrication d'un plateau de planche à roulettes composite, le procédé comprenant :
la découpe des couches de matériau (100, 200, 201, 300, 301, 400) d'un plateau de planche à roulettes (10) en une taille appropriée, si les couches de matériau (100, 200, 201, 300, 301, 400) ne sont pas prédécoupées, lesquelles couches de matériau (100, 200, 201, 300, 301, 400) sont conformes à l'une quelconque des revendications 1 à 14 et dans un ordre défini dans l'une quelconque des revendications 1 à 14,
la disposition des couches de matériau (100, 200, 201, 300, 301, 400) les unes sur les autres avec une couche adhésive entre elles dans un moule,
le pressage des couches de matériau (100, 200, 201, 300, 301, 400) ensemble dans le moule pendant une durée prédéterminée et à l'aide d'une pression et d'une température prédéterminées, en utilisant une technologie de pression ou une infusion de résine dans une technologie d'ensachage sous vide ou un moulage par transfert de résine (MTR) permettant de former un plateau de planche à roulettes préformé, et
la découpe du plateau de planche à roulettes préformé pour obtenir la forme du plateau de planche à roulettes final, si nécessaire.
